# EUROPEAN PATENT SPECIFICATION

(11) **EP 2 874 274 B1**
(45) Date of publication and mention of the grant of the patent: **07.10.2020**
(21) Application number: 13817375.2
(22) Date of filing: 10.07.2013
(51) Int. Cl.: H02J 13/00, G05F 1/66, H02J 3/14

(54) **POWER CONTROL DEVICE, POWER CONTROL METHOD AND POWER CONTROL SYSTEM**
STROMSTEUERUNGSVORRICHTUNG, STROMSTEUERUNGSVERFAHREN UND STROMSTEUERUNGSSYSTEM
DISPOSITIF DE COMMANDE DE PUISSANCE, PROCÉDÉ DE COMMANDE DE PUISSANCE ET SYSTÈME DE COMMANDE DE PUISSANCE

(30) Priority: 11.07.2012 JP 2012156006
(43) Date of publication of application: 20.05.2015
(73) Proprietor: Kyocera Corporation, Kyoto-shi, Kyoto 612-8501 (JP)
(72) Inventor: NAKAYAMA, Taku, Kyoto-shi Kyoto 612-8501 (JP)
(74) Representative: SSM Sandmair
(86) International application number: PCT/JP2013/004269
(87) International publication number: WO 2014/010242

(56) References cited:
- WO-A2-2010/065198
- JP-A- 2002 320 327
- JP-A- 2003 116 219
- JP-A- 2003 153 347
- JP-A- 2008 182 840
- JP-A- 2011 234 570
- US-A1- 2012 150 359

## Description

### CROSS-REFERENCE TO RELATED APPLICATION

This application claims priority to and the benefit of Japanese Patent Application No. 2012-156006 filed July 11, 2012, the entire contents of which are incorporated herein by reference.

### TECHNICAL FIELD

The present invention relates to a power control device, a power control method, and a power control system that control load devices based on control instructions from a server.

### BACKGROUND

In recent years, a system has been proposed for controlling various devices from a remote location over the Internet (see Patent Literature 1). In order for a server to control devices directly in the context of device control over a network such as the Internet, it is necessary to assign each device a unique identification number, such as a global IP address, that uniquely specifies a device that is the target of control. As compared to the number of devices that are the target of control, the number of unique identification numbers is limited. Hence, assigning a unique identification number to every control device might deplete the supply of identification numbers.

A system has therefore been proposed whereby when controlling devices over a network such as the Internet, a local control device accesses a server and reads a control instruction from the server, and based on the read control instruction, a local power control device controls load devices (see Patent Literature 2). In such a configuration where a local control device acquires control instructions by polling in order to control devices, assigning a unique identification number to each device is not necessary.

### CITATION LIST

Patent Literature 1: JP 2007-336180 A
Patent Literature 2: JP 2009-260913 A

WO 2010/065198 A2 discloses a power reduction system having a power savings compensation module which is configured to determine an aggregate compensation and for providing an aggregate energy reduction induced by a power reduction device in response to receiving power status messages transmitted by a power grid status module.

US 2012/0150359 A1 discloses a computer-based electrical power management and allocation system is provided that collects demand for electric power usage and allocates electric power supply in satisfaction thereof. A load control server is used to collect and schedule electrical power start requests according to policies established by either or both of the electric power consumers and electric power suppliers. The energy system collects electrical power start requests and holds them in a reservation pool for later satisfaction according to prescribed customer and supplier policies and according to an overall optimization criterion of the energy system. Start messages are then subsequently issued to begin device operation once the energy system's operational criterion is relaxed and the devices are then removed from the reservation pool. Similar queuing for later satisfaction may also be applied to the distribution of other utilities, such as water, natural gas, or guaranteed interne bandwidth.

### SUMMARY

Conventionally, however, a server creates an optimal combination of control instructions for each power control device, and each power control device controls load devices based on the combination of control instructions. Therefore, for example when uniformly reducing power within the server's management area, the processing load on the server increases when simultaneously controlling the load devices belonging to a plurality of power control devices, which may cause processing delays.

Furthermore, since a combination of a plurality of control instructions is included in the information transmitted from the server to each power control device, communication traffic increases, and a delay may occur in processing for communication.

The present invention has been conceived in light of the above problems and provides a power control device, a power control method, and a power control system that, for example when uniformly reducing power within the server's management area, can suppress an increase in the processing load on the server when simultaneously controlling the load devices belonging to a plurality of power control devices and that can suppress an increase in communication traffic between the server and the power control device.

In order to resolve the above problems, a power control device according to the present invention includes: a storage unit configured to store control instruction effect information including a plurality of control instructions for load devices possessed by a consumer's facility and a predicted power reduction amount for each of the plurality of control instructions; an instruction acquisition unit configured to acquire a power reduction instruction from a server; a control instruction creation unit configured to create a combination of some or all of the plurality of control instructions that satisfies the power reduction instruction based on the predicted power reduction amount included in the control instruction effect information; and a control unit configured to execute the some or all of the plurality of control instructions in the combination.

In the power control device according to the present invention, when the instruction acquisition unit acquires a specific operation instruction for a load device from the server, the power control device may instruct a designated load device to perform control in accordance with a designated operation.

In the power control device according to the present invention, the control instruction effect information may further include a response time for each control instruction, and the control instruction creation unit may create the combination of some or all of the plurality of control instructions that satisfies the power reduction instruction based on a demand remaining time calculated from a time at which the instruction acquisition unit acquired the power reduction instruction and on the response time included in the control instruction effect information.

In the power control device according to the present invention, the demand remaining time may be a remaining time within a certain standard time period used in a contractual power agreement.

In the power control device according to the present invention, the power control device may acquire the control instruction effect information from the server and store the control instruction effect information in the storage unit.

In the power control device according to the present invention, each of the plurality of control instructions may be ranked by priority, and the control instruction creation unit may create the combination of some or all of the plurality of control instructions that satisfies the power reduction instruction from a combination of control instructions having high priority among control instructions related to load devices in operation.

A power control method according to the present invention includes the steps of: storing control instruction effect information including a plurality of control instructions and a predicted power reduction amount for each of the plurality of control instructions; acquiring a power reduction instruction from a server; creating a combination of some or all of the plurality of control instructions that satisfies the power reduction instruction based on the predicted power reduction amount included in the control instruction effect information; and executing the some or all of the plurality of control instructions in the combination.

A power control system according to the present invention includes: a power control device; and a server, the server creating a power reduction instruction, the power control device storing control instruction effect information including a plurality of control instructions and a predicted power reduction amount for each of the plurality of control instructions, the power control device acquiring the power reduction instruction from the server and creating a combination of some or all of the plurality of control instructions that satisfies the power reduction instruction based on the predicted power reduction amount included in the control instruction effect information; and the power control device executing the some or all of the plurality of control instructions in the combination.

According to the power control device, power control method, and power control system of the present invention, for example when uniformly reducing power within the server's management area, it is possible to suppress an increase in the processing load on the server when simultaneously controlling the load devices belonging to a plurality of power control devices and to suppress an increase in communication traffic between the server and the power control device.

The scope of the invention is defined by the appended claims. Any reference to "embodiment(s)", "example(s)" or "aspect(s) of the invention" in this description not falling under the scope of the claims should be interpreted as illustrative example(s) for understanding the invention.

### BRIEF DESCRIPTION OF DRAWINGS

The present invention will be further described below with reference to the accompanying drawings, wherein:
FIG. 1 schematically illustrates the structure of a power control system according to an embodiment of the present invention;
FIG. 2 is a functional block diagram of devices located within the same LAN;
FIG. 3 is a functional block diagram of a power control device according to an embodiment of the present invention;
FIG. 4 is an example of control instruction effect information according to an embodiment of the present invention;
FIG. 5 is a flowchart of operations by a power control device according to an embodiment of the present invention; and
FIG. 6 is a modification to the control instruction effect information according to an embodiment of the present invention.

### DESCRIPTION OF EMBODIMENTS

The following describes an embodiment of the present invention.

### (Embodiment)

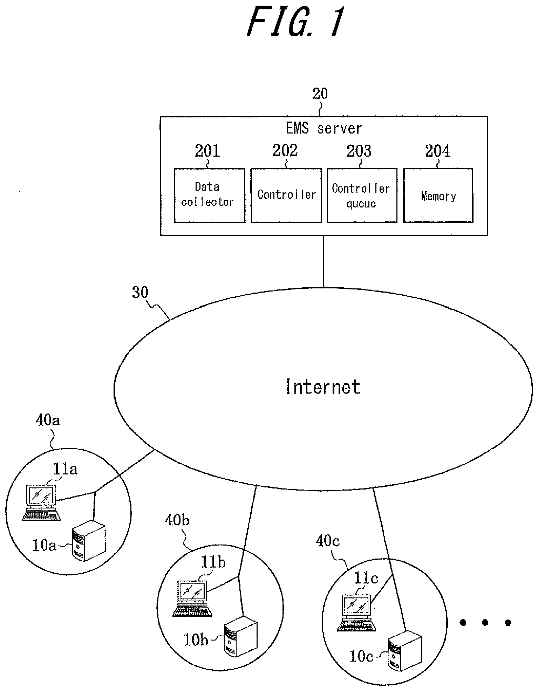

First, a power control system according to an embodiment of the present invention is described. FIG. 1 is a communication system structure diagram schematically illustrating the structure of a power control system according to an embodiment of the present invention.

As illustrated in FIG. 1, the power control system includes a plurality of power control devices 10a to 10c, a plurality of user terminals 11a to 11c, and an Energy Management System (EMS) server 20. FIG. 1 illustrates an example with three each of the power control devices and the user terminals, yet this example is not limiting. Two of each may be included, as may four or more of each.

The plurality of power control devices 10a to 10c, the plurality of user terminals 11a to 11c, and the EMS server 20 are connected over the Internet 30 and exchange signals for data, control instructions, and the like. The power control device 10a and the user terminal 11a, the power control device 10b and the user terminal 11b, and the power control device 10c and the user terminal 11c are respectively located in independent Local Area Networks (LANs) 40a to 40c.

The power control devices 10a to 10c are each, for example, an EMS Gateway. The power control devices 10a to 10c periodically transmit a measured value, such as the power consumption detected by the below-described sensor, to the EMS server 20. By polling, each of the power control devices 10a to 10c acquires, from the EMS server 20, control instructions for the load devices located within the one of the LANs 40a to 40c to which the power control device belongs. Based on the control instructions received from the EMS server 20, each of the power control devices 10a to 10c controls the load devices located within the one of the LANs 40a to 40c to which the power control device belongs.

Each of the user terminals 11a to 11c includes a display device and can display the measured value measured by the sensor located in the one of the LANs 40a to 40c to which the user terminal belongs as well as the operation status of the load devices located in that LAN. When displaying the measured value and the control status, the user terminals 11a to 11c acquire data from the EMS server 20 by HTTP, and the web browser on each of the user terminals 11a to 11c creates a measured value display page. Each of the user terminals 11a to 11c also issues control instructions to the load devices in the one of the LANs 40a to 40c to which the user terminal belongs. The issuing of control instructions is based on detection of user operation on a device control page configured by the web browser. The user terminals 11a to 11c transmit the issued control instructions to the EMS server 20.

The EMS server 20 receives and stores the measured values transmitted from the power control devices 10a to 10c. The EMS server 20 also receives the control instructions issued by the user terminals 11a to 11c. Additionally, the EMS server 20 creates a control instruction for each load device. The received control instruction and the created control instruction are read by the power control devices 10a to 10c by polling. The EMS server 20 also receives and updates registration of sensor information located in the LANs 40a to 40c.

Furthermore, for example when uniformly reducing power within the EMS server's management area, instead of a control instruction for each load device, the EMS server 20 creates an instruction for the total amount by which power is to be reduced in each LAN 40a to 40c (power reduction instruction). The power reduction instruction is, for example, "reduce by 2 kW or more". This power reduction instruction is read by each of the power control devices 10a to 10c by polling.

The EMS server 20 includes a data collector 201, a controller 202, a controller queue 203, and a memory 204.

The data collector 201 periodically collects and stores or updates measured values and sensor registration information.

The controller 202 creates the control instruction for each load device with a variety of algorithms in order to achieve a variety of purposes. The controller 202 also creates the power reduction instruction. The controller queue 203 stores the control instructions received from the user terminals 11a to 11c, and the control instructions and power reduction instructions created by the controller 202.

The memory 204 stores a variety of data used by the controller 202 to create the control instructions. For example, the memory 204 stores control instruction effect information that includes a predicted power reduction amount for each control instruction. Based on the control instruction effect information, the controller 202 can create an appropriate combination of control instructions. The predicted power reduction amount corresponding to each control instruction is created and updated by receiving, from the power control devices 10a to 10c, the actual results for past power reduction values corresponding to the control instruction.

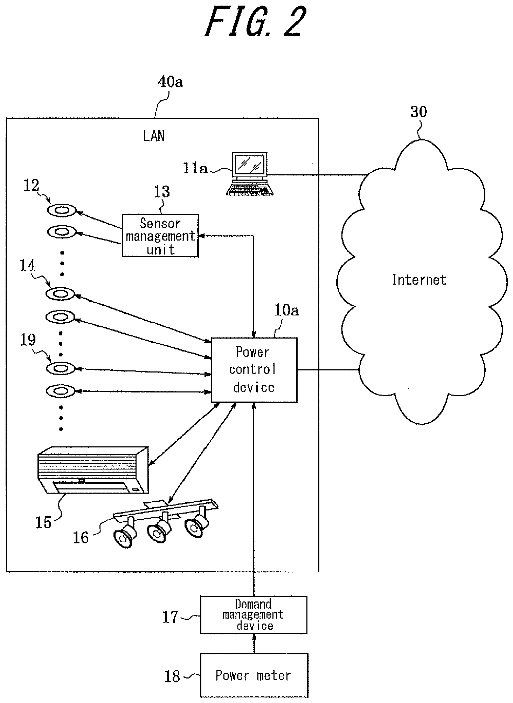

Next, the transmission of measured values and the control of load devices by the power control devices 10a to 10c are described. FIG. 2 is a functional block diagram of devices located in the LAN 40a, a demand management device 17, and a power meter 18. Functional block diagrams for devices located in the LANs 40b and 40c, demand management devices, and power meters are similar to the functional block diagram of the devices located in the LAN 40a, the demand management device 17, and the power meter 18, and hence a description thereof is omitted.

A first sensor 12, a sensor management unit 13, a second sensor 14, a third sensor 19, load devices 15 and 16, the power control device 10a, and the user terminal 11a are located in the LAN 40a. The power control device 10a is connected to the demand management device 17 and the power meter 18. FIG. 2 illustrates an example with two load devices, yet this example is not limiting. There may be one load device, or three or more.

The first sensor 12 is any sensor such as a current sensor, power sensor, temperature sensor, or illumination sensor and detects a measured value related to the drive status of the load devices 15 and 16 located in the LAN 40a.

The sensor management unit 13 detects the measured value from the first sensor 12. The sensor management unit 13 communicates periodically with the power control device 10a by a standard protocol such as ZigBee (registered trademark) Smart Energy Profile 2.0 (SEP 2.0) or Echonet (registered trademark).

The second sensor 14 is any sensor such as a current sensor, power sensor, temperature sensor, or illumination sensor and detects a measured value related to the drive status of the load devices 15 and 16 located in the LAN 40a. Unlike the first sensor 12, the second sensor communicates with the power control device 10a by a unique protocol.

The third sensor 19 is any sensor such as a current sensor, power sensor, temperature sensor, or illumination sensor and detects a measured value related to the drive status of the load devices 15 and 16 located in the LAN 40a. Unlike the first sensor 12 and the second sensor 14, the third sensor 19 communicates directly with the power control device 10a by a standard protocol such as SEP 2.0 or Echonet (registered trademark).

The load devices 15 and 16 are devices driven by electrical power, such as an air conditioner, lighting appliance, or refrigerator. The operation status of the load devices 15 and 16 is adjustable, for example by temperature adjustment or illumination intensity adjustment, and the power consumption of the load devices 15 and 16 varies in accordance with such adjustments. The load devices 15 and 16 communicate with the power control device 10a by a standard protocol such as SEP 2.0 or Echonet (registered trademark).

As described above, the power control device 10a can communicate with the sensor management unit 13 and the second sensor 14 and periodically transmits the measured values from the first sensor 12 and the second sensor 14 to the EMS server 20 over the Internet 30. As also described above, by polling, the power control device 10a acquires, from the EMS server 20, control instructions for the load devices 15 and 16 located within the LAN 40a to which the power control device 10a belongs, and based on the control instructions, controls the operation status of the load devices 15 and 16.

The power control device 10a recognizes the start of a demand time period from the output of the demand management device 17. As described below, the power control device 10a also acquires, from the output of the demand management device 17, the current value of power consumption by all of the load devices (including the load devices 15 and 16) within the LAN 40a during the current demand time period.

As described above, the user terminal 11a displays the measured values from the first sensor 12 and the second sensor 14 that are located in the LAN 40a to which the user terminal 11a belongs and displays the operation status of the load devices 15 and 16. As also described above, the user terminal 11a allows for direct control instructions for the load devices 15 and 16, such as directly setting the temperature or the illumination intensity.

The power meter 18 measures the cumulative power consumption for each store during the demand time period (demand power (power usage)). The demand time period is a standard time period used in a contractual power agreement between the business operator (consumer) that runs a store or the like and the power company. For example, when the demand time period is 30 minutes and the contract power is 300 kW, the contract is considered to be fulfilled as long as the 30 minute average is less than 300 kW, even if the power consumption temporarily exceeds 300 kW during any demand time period. The power meter 18 resets the demand power at the start of a demand time period and measures the demand power from the start of the demand time period to the present. By measuring the power consumption at the end of a demand time period, the demand power during that demand time period can be measured. The demand management device 17 reads a pulse output by the power meter 18 and outputs the read pulse to the power control device 10a. Note that the power meter 18 and the demand management device 17 are not only provided for the power control device 10a in the LAN 40a, but also for the power control devices in the LANs 40b and 40c.

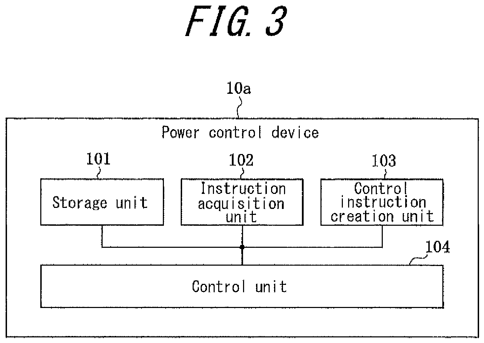

FIG. 3 is a detailed functional block diagram of the power control device 10a according to an embodiment of the present invention. The power control devices 10b and 10c have the same structure, and hence a description thereof is omitted.

The power control device 10a includes a storage unit 101, an instruction acquisition unit 102, a control instruction creation unit 103, and a control unit 104.

The storage unit 101 stores control instruction effect information that includes a plurality of control instructions and a predicted power reduction amount for each of the control instructions. The control instruction effect information is the same as the control instruction effect information stored in the memory 204 of the EMS server 20. The power control device 10a periodically acquires the control instruction effect information from the EMS server 20 and stores the control instruction effect information in the storage unit 101.

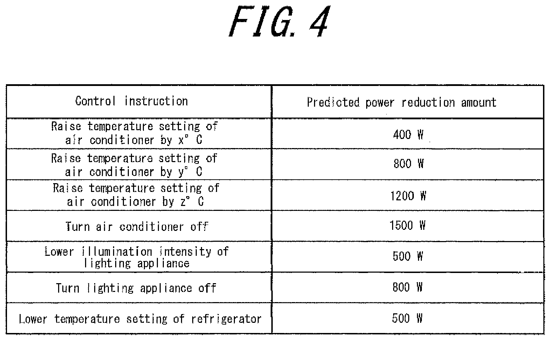

FIG. 4 illustrates an example of the control instruction effect information. FIG. 4 shows the control instruction effect information in table format. For example, the control instruction effect information includes a control instruction "raise temperature setting of air conditioner by x°C" and a predicted power reduction amount of "400 W" for this control instruction.

The instruction acquisition unit 102 acquires a control instruction or a power reduction instruction from the EMS server 20 by polling. When the instruction acquisition unit 102 acquires a power reduction instruction by polling, then based on the predicted power reduction amount included in the control instruction effect information, the control instruction creation unit 103 creates a combination of control instructions that satisfies the power reduction instruction acquired from the EMS server 20. For example, if the power reduction instruction is "reduce by 2 kW or more", then based on the control instruction effect information illustrated in FIG. 4, the control instruction creation unit 103 extracts control instructions and creates a combination so that the total of the predicted power reduction amounts is 2 kW or more. For example, the control instruction creation unit 103 creates a combination of the control instructions "raise temperature setting of air conditioner by z°C", "lower illumination intensity of lighting appliance", and "lower temperature setting of refrigerator". The total of the predicted power reduction amounts for these control instructions is 2.2 kW (1200 W + 500 W + 500 W), thus satisfying the power reduction instruction. The actual extraction of control instructions may be random, yet the control instructions are preferably ranked by priority from the control instruction with the least effect on the consumer and extracted in order of priority to satisfy the power reduction instruction. The control instruction creation unit 103 also preferably executes processing to determine whether each load device is in operation, extract control instructions that are for load devices in operation and that have high priority, and determine the minimum combination that satisfies the required power reduction amount.

The control unit 104 executes a variety of control pertaining to the power control device 10a. Specifically, the control unit 104 determines whether the data acquired by the instruction acquisition unit 102 by polling are a power reduction instruction. When the data are a power reduction instruction, the control unit 104 causes the control instruction creation unit 103 to create a combination of control instructions. The control unit 104 executes a control instruction acquired by polling. The control unit 104 also executes the control instructions in the combination of control instructions created by the control instruction creation unit 103.

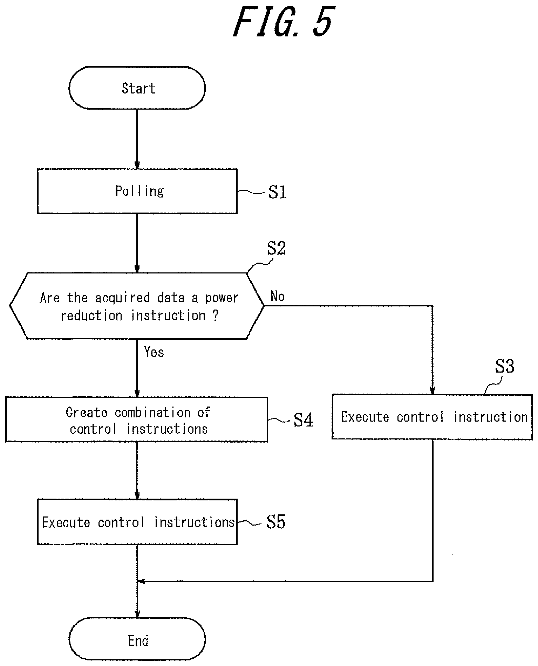

Next, operations of the power control device 10a according to an embodiment of the present invention are described using the flowchart in FIG. 5. Operations of the power control devices 10b and 10c are the same as operations of the power control device 10a, and hence a description thereof is omitted. The power control device 10a is described as periodically acquiring the control instruction effect information from the EMS server 20, and the control instruction effect information is described as having been stored in the storage unit 101 in advance.

First, the instruction acquisition unit 102 acquires a control instruction or a power reduction instruction from the EMS server 20 by polling (step S1).

Next, the control unit 104 determines whether the data acquired by the instruction acquisition unit 102 by polling are a power reduction instruction (step S2). When the data acquired by polling are not a power reduction instruction, processing proceeds to step S3, whereas when the data acquired by polling are a power reduction instruction, processing proceeds to step S4.

When the data acquired by polling are not a power reduction instruction, i.e. when the acquired data are a control instruction that directly designates a load device and provides an instruction for a specific operation for the designated load device (a specific temperature setting, power ON/OFF, or the like), the control unit 104 executes the control instruction acquired by polling (step S3). In other words, the control unit 104 instructs the designated load device to perform control corresponding to the designated operation. Processing then terminates.

On the other hand, when the data acquired by polling are a power reduction instruction, the control unit 104 causes the control instruction creation unit 103 to create a combination of control instructions. Based on the predicted power reduction amount included in the control instruction effect information, the control instruction creation unit 103 creates a combination of control instructions that satisfies the power reduction instruction acquired from the EMS server 20 (step S4).

Next, the control unit 104 executes the control instructions in the combination of control instructions created by the control instruction creation unit 103 (step S5). Processing then terminates.

In this way, according to the present invention, when acquiring a power reduction instruction from the EMS server 20, the power control device 10a autonomously creates a control instruction. Therefore, for example when uniformly reducing power within the EMS server's management area, an increase in the processing load on the EMS server can be suppressed when simultaneously controlling the load devices belonging to a plurality of power control devices. Furthermore, the power reduction instruction alone suffices for communication between the power control device 10a and the EMS server 20, in which case an increase in communication traffic between the EMS server and the power control device can be suppressed.

Here, after step S5, based on the power reduction amount due to execution of the control instructions, the control unit 104 may update the predicted power reduction amount included in the control instruction effect information stored in the storage unit 101. With this configuration, based on the newer predicted power reduction amount included in the control instruction effect information, the control instruction creation unit 103 creates a more accurate combination of control instructions that satisfies the power reduction instruction acquired from the EMS server 20.

Furthermore, the control unit 104 may transmit the control instruction effect information updated in this way to the EMS server 20. With this configuration, the EMS server 20 can create more accurate control instructions based on newer control instruction effect information.

Here, the control instruction effect information stored in the storage unit 101 may be a portion of the control instruction effect information stored in the memory 204 of the EMS server 20. Specifically, among the control instruction effect information stored in the memory 204 of the EMS server 20, it is possible for example to store only the control instruction effect information recorded within the past two weeks in the storage unit 101. Furthermore, in this case, in addition to the control instruction effect information recorded within the past two weeks, control instruction effect information pertaining to control instructions with a large effect may be stored as necessary. Control instruction effect information or the like pertaining to instruction information that might occur during a special event, such as a typhoon, may also be stored.

The present embodiment describes an example in which the power control device 10a periodically acquires the control instruction effect information from the EMS server 20, yet this example is not limiting. When the power control device 10a executes a control instruction, the power control device 10a may create and update the control instruction effect information based on the power reduction amount due to execution of the control instruction.

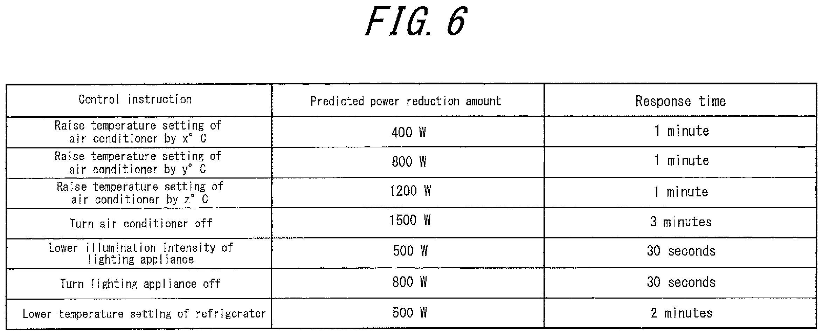

In the present embodiment, the control instruction effect information includes control instructions and a predicted power reduction amount for each of the control instructions, yet this example is not limiting. The control instruction effect information may further include a response time for each control instruction. FIG. 6 illustrates an example of control instruction effect information that includes the response time. As illustrated in FIG. 6, the control instruction effect information for example includes a control instruction "raise temperature setting of air conditioner by x°C", a predicted power reduction amount of "400 W", and a response time of "1 min".

Specifically, in this case, the control unit 104 calculates a demand remaining time based on the time at which the instruction acquisition unit acquired the power reduction instruction and on the start of the demand time period from output of the demand management device 17. Based on the demand remaining time and on the response time included in the control instruction effect information, the control instruction creation unit 103 creates a combination of control instructions that satisfies the power reduction instruction. For example, when the demand remaining time is less than two minutes, the effect of control instructions such as "turn air conditioner off" or "lower temperature setting of refrigerator" would be too late even if these control instructions were executed during the demand remaining time. Therefore, the control instruction creation unit 103 excludes these control instructions when creating the combination of control instructions that satisfies the power reduction instruction.

With this configuration, the power control device 10a can create a more accurate combination of control instructions that satisfies the power reduction instruction by also taking the response time of the control instructions into consideration.

### REFERENCE SIGNS LIST

10a to 10c: Power control device
101: Storage unit
102: Instruction acquisition unit
103: Control instruction creation unit
104: Control unit
105: Recording unit
11a to 11c: User terminal
12: First sensor
13: Sensor management unit
14: Second sensor
15 to 16: Load device
17: Demand management device
18: Power meter
19: Third sensor
20: EMS server
30: Internet
40a to 40c: LAN
201: Data collector
202: Controller
203: Controller queue
204: Memory

## Claims

1. A power control device (10) in a local area network, the device comprising:
a storage unit (101) configured to store control instruction effect information including a plurality of control instructions for load devices possessed by a consumer's facility and a predicted power reduction amount for each of the plurality of control instructions;
an instruction acquisition unit (102) configured to acquire a power reduction instruction from an energy management system server (20) configured to communicate with a plurality of power control devices respectively located in a plurality of independent local area networks;
a control instruction creation unit (103) configured to extract control instructions and create a combination of some or all of the extracted control instructions which have predicted power reduction amounts that satisfy, in total, the power reduction instruction, based on the predicted power reduction amount included in the control instruction effect information; and
a control unit (104) configured to execute the some or all of the plurality of control instructions in the combination and, based on the power reduction amount due to execution of the control instructions, update the predicted power reduction amount included in the control instruction effect information stored in the storage unit (101).

2. The power control device (10) according to claim 1, wherein when the instruction acquisition unit (102) acquires a specific operation instruction for a load device from the energy management system server (20), the power control device instructs a designated load device to perform control in accordance with a designated operation.

3. The power control device (10) according to claim 1, wherein
the control instruction effect information further includes a response time for each control instruction, and
the control instruction creation unit (103) creates the combination of some or all of the plurality of control instructions that satisfies the power reduction instruction based on a demand remaining time calculated from a time at which the instruction acquisition unit acquired the power reduction instruction and on the response time included in the control instruction effect information.

4. The power control device (10) according to claim 3, wherein the demand remaining time is a remaining time within a certain standard time period used in a contractual power agreement.

5. The power control device (10) according to claim 1, wherein the power control device (10) acquires the control instruction effect information from the energy management system server (20) and stores the control instruction effect information in the storage unit.

6. The power control device (10) according to claim 1, wherein
each of the plurality of control instructions is ranked by priority, and
the control instruction creation unit (103) creates the combination of some or all of the plurality of control instructions that satisfies the power reduction instruction from a combination of control instructions having high priority among control instructions related to load devices in operation.

7. A power control method of a power control device in a local area network, the method including steps of:
storing control instruction effect information including a plurality of control instructions and a predicted power reduction amount for each of the plurality of control instructions;
acquiring a power reduction instruction from an energy management system server (20) which communicates with a plurality of power control devices respectively located in a plurality of independent local area networks;
extracting control instructions and creating a combination of all of the extracted control instructions which have predicted power reduction amounts that satisfy, in total, the power reduction instruction, based on the predicted power reduction amount included in the control instruction effect information; and
executing the some or all of the plurality of control instructions in the combination and, based on the power reduction amount due to execution of the control instructions, updating the predicted power reduction amount included in the stored control instruction effect information.

8. A power control system comprising:
an energy management system server (20) configured to communicate with a plurality of power control devices respectively located in a plurality of independent local area networks; and
the power control device (10) according to claim 1,
wherein:
the energy management system server (20) is configured to create the power control instruction; and
the instruction acquisition unit (102) of the power control device (10) is configured to acquire the power reduction instruction from the energy management system server (20).

## Patentansprüche

1. Leistungssteuergerät (10) in einem lokalen Netzwerk, wobei das Gerät Folgendes umfasst:
eine Speichereinheit (101), die konfiguriert ist, Steueranweisungseffektinformationen zu speichern, die eine Vielzahl von Steueranweisungen für Lastgeräte, die die Einrichtung eines Verbrauchers besitzt, und einen vorhergesagten Betrag der Leistungsreduktion für jede der Vielzahl von Steueranweisungen beinhalten;
eine Anweisungserfassungseinheit (102), die konfiguriert ist, eine Leistungsreduktionsanweisung von einem Energiemanagementsystemserver (20) zu erfassen, der konfiguriert ist, mit einer Vielzahl von Leistungssteuergeräten zu kommunizieren, die sich jeweils in einer Vielzahl von unabhängigen lokalen Netzwerken befinden;
eine Steueranweisungserzeugungseinheit (103), die konfiguriert ist, Steueranweisungen zu extrahieren und eine Kombination von einigen der oder allen extrahierten Steueranweisungen, die vorhergesagte Beträge der Leistungsreduktion haben, die insgesamt die Leistungsreduktionsanweisung erfüllen, basierend auf dem vorhergesagten Betrag der Leistungsreduktion, der in den Steueranweisungseffektinformationen beinhaltet ist, zu erzeugen; und
eine Steuereinheit (104), die konfiguriert ist, die einigen oder alle der Vielzahl von Steueranweisungen in der Kombination auszuführen und basierend auf dem Betrag der Leistungsreduktion aufgrund der Ausführung der Steueranweisungen den vorhergesagten Betrag der Leistungsreduktion zu aktualisieren, der in den Steueranweisungseffektinformationen beinhaltet ist, die in der Speichereinheit (101) gespeichert sind.

2. Leistungssteuergerät (10) nach Anspruch 1, wobei, wenn die Anweisungserfassungseinheit (102) eine spezifische Betriebsanweisung für ein Lastgerät vom Energiemanagementsystemserver (20) erfasst, das Leistungssteuergerät ein benanntes Lastgerät anweist, Steuerung in Übereinstimmung mit einem benannten Betrieb durchzuführen.

3. Leistungssteuergerät (10) nach Anspruch 1, wobei
die Steueranweisungseffektinformationen ferner eine Antwortzeit für jede Steueranweisung beinhalten und
die Steueranweisungserzeugungseinheit (103) die Kombination von einigen oder allen der Vielzahl von Steueranweisungen, die die Leistungsreduktionsanweisung erfüllt, basierend auf einer verbleibenden Nachfragezeit, die aus einer Zeit berechnet wird, zu der die Anweisungserfassungseinheit die Leistungsreduktionsanweisung erfasste, und auf der Antwortzeit, die in den Steueranweisungseffektinformationen beinhaltet ist, erzeugt.

4. Leistungssteuergerät (10) nach Anspruch 3, wobei die verbleibende Nachfragezeit eine verbleibende Zeit innerhalb eines bestimmten Standardzeitraums ist, der in einer vertraglichen Stromvereinbarung verwendet wird.

5. Leistungssteuergerät (10) nach Anspruch 1, wobei das Leistungssteuergerät (10) die Steueranweisungseffektinformationen vom Energiemanagementsystemserver (20) erfasst und die Steueranweisungseffektinformationen in der Speichereinheit speichert.

6. Leistungssteuergerät (10) nach Anspruch 1, wobei
jede der Vielzahl von Steueranweisungen nach Priorität geordnet ist und
die Steueranweisungserzeugungseinheit (103) die Kombination von einigen oder allen der Vielzahl von Steueranweisungen, die die Leistungsreduktionsanweisung erfüllt, aus einer Kombination von Steueranweisungen mit hoher Priorität unter Steueranweisungen im Zusammenhang mit Lastgeräten im Betrieb erzeugt.

7. Leistungssteuerverfahren eines Leistungssteuergeräts in einem lokalen Netzwerk, wobei das Verfahren folgende Schritte beinhaltet:
Speichern von Steueranweisungseffektinformationen, die eine Vielzahl von Steueranweisungen und einen vorhergesagten Betrag der Leistungsreduktion für jede der Vielzahl von Steueranweisungen beinhalten;
Erfassen einer Leistungsreduktionsanweisung von einem Energiemanagementsystemserver (20), der mit einer Vielzahl von Leistungssteuergeräten kommuniziert, die sich jeweils in einer Vielzahl von unabhängigen lokalen Netzwerken befinden;
Extrahieren von Steueranweisungen und Erzeugen einer Kombination aller extrahierter Steueranweisungen, die vorhergesagte Beträge der Leistungsreduktion haben, die insgesamt die Leistungsreduktionsanweisung erfüllen, basierend auf dem vorhergesagten Betrag der Leistungsreduktion, der in den Steueranweisungseffektinformationen beinhaltet ist; und
Ausführen der einigen oder aller der Vielzahl von Steueranweisungen in der Kombination und basierend auf dem Betrag der Leistungsreduktion aufgrund der Ausführung der Steueranweisungen, Aktualisieren des vorhergesagten Betrags der Leistungsreduktion, der in den gespeicherten Steueranweisungseffektinformationen beinhaltet ist.

8. Leistungssteuersystem, umfassend:
einen Energiemanagementsystemserver (20), der konfiguriert ist, mit einer Vielzahl von Leistungssteuergeräten zu kommunizieren, die sich jeweils in einer Vielzahl von unabhängigen lokalen Netzwerken befinden; und
das Leistungssteuergerät (10) nach Anspruch 1,
wobei:
der Energiemanagementsystemserver (20) konfiguriert ist, die Leistungssteueranweisung zu erzeugen; und
die Anweisungserfassungseinheit (102) des Leistungssteuergeräts (10) konfiguriert ist, die Leistungsreduktionsanweisung vom Energiemanagementsystemserver (20) zu erfassen.

## Revendications

1. Dispositif de commande de puissance (10) dans un réseau local, le dispositif comprenant :
une unité de stockage (101) configurée pour stocker des informations d'effet d'instruction de commande incluant une pluralité d'instructions de commande pour des dispositifs de charge que l'installation d'un consommateur possède et une quantité de réduction de puissance prédite pour chacune de la pluralité d'instructions de commande ;
une unité d'acquisition d'instruction (102) configurée pour acquérir une instruction de réduction de puissance à partir d'un serveur de système de gestion d'énergie (20) configuré pour communiquer avec une pluralité de dispositifs de commande de puissance respectivement situés dans une pluralité de réseaux locaux indépendants ;
une unité de création d'instruction de commande (103) configurée pour extraire des instructions de commande et créer une combinaison de certaines ou de la totalité des instructions de commande extraites qui ont des quantités de réduction de puissance prédites qui satisfont, au total, à l'instruction de réduction de puissance, sur la base de la quantité de réduction de puissance prédite incluse dans les informations d'effet d'instruction de commande ; et
une unité de commande (104) configurée pour exécuter les certaines ou la totalité de la pluralité d'instructions de commande dans la combinaison et, sur la base de la quantité de réduction de puissance due à l'exécution des instructions de commande, mettre à jour la quantité de réduction de puissance prédite incluse dans les informations d'effet d'instruction de commande stockées dans l'unité de stockage (101).

2. Dispositif de commande de puissance (10) selon la revendication 1, dans lequel, lorsque l'unité d'acquisition d'instruction (102) acquiert une instruction de fonctionnement spécifique pour un dispositif de charge à partir du serveur de système de gestion d'énergie (20), le dispositif de commande de puissance donne l'instruction à un dispositif de charge désigné de réaliser une commande conformément à un fonctionnement désigné.

3. Dispositif de commande de puissance (10) selon la revendication 1, dans lequel
les informations d'effet d'instruction de commande incluent en outre un temps de réponse pour chaque instruction de commande, et
l'unité de création d'instruction de commande (103) crée la combinaison de certaines ou de la totalité de la pluralité d'instructions de commande qui satisfait à l'instruction de réduction de puissance sur la base d'un temps restant de demande calculé depuis un instant auquel l'unité d'acquisition d'instruction a acquis l'instruction de réduction de puissance et du temps de réponse inclus dans les informations d'effet d'instruction de commande.

4. Dispositif de commande de puissance (10) selon la revendication 3, dans lequel le temps restant de demande est un temps restant au sein d'une certaine période standard utilisée dans un accord contractuel en terme de puissance.

5. Dispositif de commande de puissance (10) selon la revendication 1, dans lequel le dispositif de commande de puissance (10) acquiert les informations d'effet d'instruction de commande à partir du serveur de système de gestion d'énergie (20) et stocke les informations d'effet d'instruction de commande dans l'unité de stockage.

6. Dispositif de commande de puissance (10) selon la revendication 1, dans lequel
chacune de la pluralité d'instructions de commande est classée par priorité, et
l'unité de création d'instruction de commande (103) crée la combinaison de certaines ou de la totalité de la pluralité d'instructions de commande qui satisfait à l'instruction de réduction de puissance à partir d'une combinaison d'instructions de commande ayant une haute priorité parmi des instructions de commande connexes à des dispositifs de charge en fonctionnement.

7. Procédé de commande de puissance d'un dispositif de commande de puissance dans un réseau local, le procédé incluant des étapes de :
le stockage d'informations d'effet d'instruction de commande incluant une pluralité d'instructions de commande et une quantité de réduction de puissance prédite pour chacune de la pluralité d'instructions de commande ;
l'acquisition d'une instruction de réduction de puissance à partir d'un serveur de système de gestion d'énergie (20) qui communique avec une pluralité de dispositifs de commande de puissance respectivement situés dans une pluralité de réseaux locaux indépendants ;
l'extraction d'instructions de commande et la création d'une combinaison de la totalité des instructions de commande extraites qui ont des quantités de réduction de puissance prédites qui satisfont, au total, à l'instruction de réduction de puissance, sur la base de la quantité de réduction de puissance prédite incluse dans les informations d'effet d'instruction de commande ; et
l'exécution des certaines ou de la totalité de la pluralité d'instructions de commande dans la combinaison et, sur la base de la quantité de réduction de puissance due à l'exécution des instructions de commande, la mise jour de la quantité de réduction de puissance prédite incluse dans les informations d'effet d'instruction de commande stockées.

8. Système de commande de puissance, comprenant :
un serveur de système de gestion d'énergie (20) configuré pour communiquer avec une pluralité de dispositifs de commande de puissance respectivement situés dans une pluralité de réseaux locaux indépendants ; et
le dispositif de commande de puissance (10) selon la revendication 1, dans lequel :
le serveur de système de gestion d'énergie (20) est configuré pour créer l'instruction de commande de puissance ; et
l'unité d'acquisition d'instruction (102) du dispositif de commande de puissance (10) est configurée pour acquérir l'instruction de réduction de puissance à partir du serveur de système de gestion d'énergie (20).
